# EUROPEAN PATENT SPECIFICATION

(11) **EP 1 961 059 B1**
(45) Date of publication and mention of the grant of the patent: **02.06.2010**
(21) Application number: 07827741.5
(22) Date of filing: 02.10.2007
(51) Int. Cl.: H01M 4/76, H01M 4/68, H01M 10/12

(54) **MULTITUBULAR SHEATHING FOR INDUSTRIAL BATTERY ELECTRODES**
UMMANTELUNG AUS MEHREREN RÖHREN FÜR INDUSTRIEBATTERIELEKTRODEN
GAINAGE MULTITUBULAIRE POUR ÉLECTRODES DE BATTERIES INDUSTRIELLES

(30) Priority: 19.12.2006 IT PD20060454
(43) Date of publication of application: 27.08.2008
(73) Proprietor: O.R.V. Ovattificio Resinatura Valpadana S.p.a., 35010 Grantorto (Padova) (IT)
(72) Inventor: PERUZZO, Maurizio, 36061 Bassano del Grappa (Vicenza) (IT)
(74) Representative: Pulieri, Gianluca Antonio
(86) International application number: PCT/IT2007/000690
(87) International publication number: WO 2008/075393

(56) References cited:
- EP-A- 0 795 916
- EP-A- 1 179 864
- EP-A- 1 720 210
- WO-A-95/08195
- JP-A- 57 095 078
- US-A1- 2002 165 291

## Description

Field of application

The object of the present finding is a multitubular sheathing for positive electrodes to be inserted in industrial batteries for "electrical drive" and/or "energy reserve", in particular of the lead-based type.

Prior art

Multitubular sheathings for male electrodes (i.e. positive) for industrial batteries have long been known.

These consist of a fabric (formed by weft and warp) made up of textile fibres based on polyester or based on polyester and polypropylene, thermo-formed by hot moulding according to the sheathing geometry.

The fabric thermo-formability is ensured by the presence of polypropylene.

Such fabric exhibits a great homogeneity and is free from chemical additives.

These features have contributed to make the sheath resistant over time.

A disadvantage of this type of fabric for making such sheathing is related to the high cost.

Less expensive solutions have recently come to the market which have replaced the fabric described above.

Such solutions consist in a non-woven fabric (TNT) produced with a spunbond technology based on polyester resin-bonded with synthetic thermo-forming bonding resins (typically acrylic, styrene-butadiene resins).

In the textile jargon, by synthetic bonding resins it is meant resins that when polymerised, develop into various branches thereby bonding the fibres to one another. They are generally used in liquid form applicable in various ways (impregnation, spray, foaming, etc.) and they carry out their bonding power on the fibres making up the TNT forming a film that envelops the various fibres, keeping them bonded.

Also polypropylene is a synthetic resin but it polymerises in linear form and therefore is not suitable for "bonding" other fibres, but is optimum for becoming a fibre itself (it can exert a bonding power on other fibres making up the TNT but such power is carried out by melting and subsequent cooling).

Synthetic bonding resins are in the practice defined as chemical additives whereas polypropylene fibres and in general, thermo-plastic/thermo-forming fibres are not defined as chemical additives.

As regards spunbond TNT, as known these are produced distributing the continuous fibre threads in irregular manner to form a "pad" that is then needle punched by needles and resin-bonded with such bonding resins (in the practice a resin matrix that impregnates the continuous threads).

While such solutions are inexpensive, they exhibit some disadvantages.

A first disadvantage is related to the non-optimal unevenness of thickness of the non-woven fabric due to the particular technology used (spunbond TNT). This negatively affects the life of such sheathing.

In particular, the fabric unevenness generates problems in the distribution of the active matter during the preparation of the positive electrode. In the zones where the non-woven fabric is more open, the active matter tends to come out of the sheathing.

Yet another disadvantage related to such sheathing arises from the fact that during the needle punching a needle could break, thereby remaining captured in the non-woven fabric, with the risk of creating various problems during the use of the sheathing on the electrode.

European patent application EP 1 720 210 discloses a cartridge belt type gauntlet for lead acid batteries comprising two sheets of spunbond, needled and flat calendered thermobonded bicomponent PET - PBT nowoven fabric. The gauntlet is made by sewing two strips of non-woven fabric at predetermined intervals and then thermoforming the multitube panel into the desired tube geometry.

Japanese patent application JP 57095078 discloses a fiber clad sleeve for storage battery. The sleeve is made of nonwoven sheets comprising more than one kind of fibres having different melting points. In particular, polyester fibers of 260°C melting point serving as main constituent are mixed in a range of 3 - 50 wt% with either one of fibers having a lower melting point than that of the polyester fibers and acting as a binder, for example, polyethylene fiber of chloride of 127 - 210°C melting point, to form a nonwoven fabric. These nonwoven fabrics are piled and sewn in stripes at equal spaces and guides for tube formation are inserted between sewn parts, while melting these binding fibers with which. The fibers of main constituent are fused to form simultaneously a sleeve consisting several continuous pieces of fiber.

European patent application EP 795 916 discloses a separator for electrodes of lead storage batteries which is made of thermo-formed non-woven fabric wherein 20 to 95 % by weight of thermoplastic staple fibers are three-dimensionally entangled with hot-melt fibers having a melting point lower by 20°C than that of the thermoplastic staple fibers. At least part of the hot-melt fibers is fused to bond the fibers with each other to fix the nonwoven structure. In particular the nonwoven fabric is prepared by subjecting a wet-laid web of staple fibers to a hydroentangling treatment.

European patent application EP 1 179 864 discloses a battery separator consisting of a nonwoven fabric having a unilayered structure. Preferably, the nonwoven fabric is made with a wet-laying process and is formed from polyolefin-based fibers. Bicomponent fibers may be used.

Disclosure of the invention

The main task of the present finding is to solve the problems found in multitubular sheathing for positive electrodes to insert in industrial batteries.

Within the scope of the above main task, an important object of the present finding is to provide a multitubular sheathing for electrodes which should ensure a long operating life.

A further important object of the present finding is to provide a multitubular sheathing for electrodes which should exhibit greater thickness evenness.

A further important object of the present finding is to provide a multitubular sheathing for electrodes which should exhibit greater retaining capacity as regards the active matter of the electrodes.

A further important object of the present finding is to provide a multitubular sheathing for electrodes with a lower and more even electrical resistance.

Yet another object of the present finding is to provide a multitubular sheathing for electrodes which should be acid resistant.

Another object of the present finding is to provide a multitubular sheathing for electrodes which should not exhibit needle crops therein.

Last but not least, another object of the present finding is to provide a multitubular sheathing for electrodes which should be cheap to manufacture.

These and other objects, which shall appear more clearly hereinafter, are achieved by a multitubular sheathing for electrodes of industrial batteries, which defines a plurality of longitudinal pockets receiving the terminals of an electrode inside and is made of thermo-formed non-woven fabric formed from staple fibres made integral with one another, at least a portion thereof consisting of thermo-forming fibres. The surface of the sheathing contacting the terminals exhibits a layer of non-woven fabric having fibres oriented in longitudinal direction.

Brief description of the drawings

Further features and advantages of the finding will appear more clearly from the description of a preferred but non-exclusive embodiment thereof, illustrated by way of a non-limiting example in the annexed drawings, wherein:

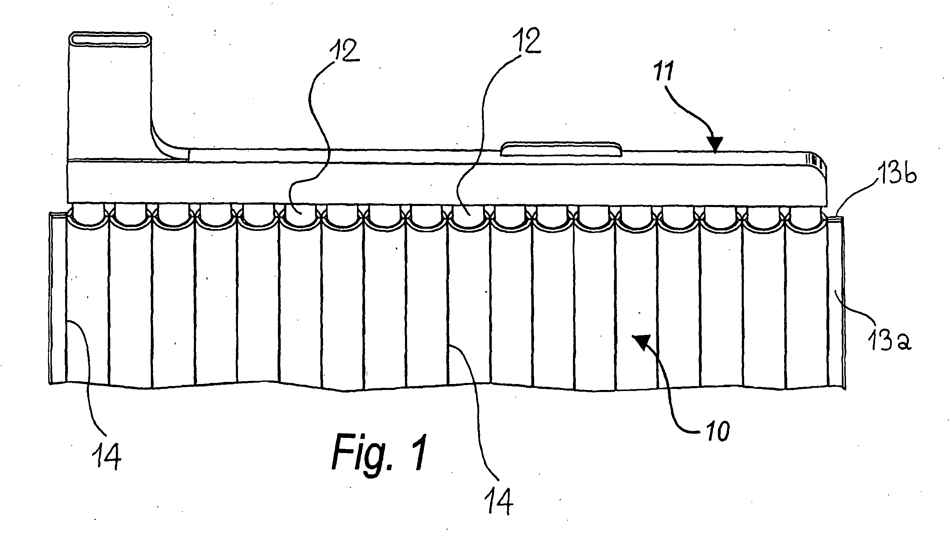

- figure 1 shows a front perspective view of a positive electrode for battery with relevant multitubular sheathing.

Detailed description

With reference to the figures mentioned above, a multitubular sheathing according to the finding is globally indicated with reference numeral 10, whereas the positive electrode, with the terminals 12 thereof inserted in the tubular portions of the sheathing, is indicated with reference numeral 11. Functionally, the sheathing has the function of containing and retaining the active matter laid on the electrode terminals.

According to the invention, such multitubular sheathing 10 is made of thermo-formed non-woven fabric formed starting from staple fibres made integral with one another, at least a portion thereof consisting of thermo-forming fibres.

Thermo-forming or thermo-plastic fibres are understood to comprise both fibres melting at temperatures below 200°C, such as polypropylene fibres and bicomponent fibres, and fibres melting at temperatures above 200°C, such as polyester fibres.

Advantageously, thermo-plastic fibres undergo a glass transition state in the passage from the fused state to the solid state. This is used to impart stiffness to the end product.

Preferably, as will by explained hereinafter, the multitubular sheathing is obtained starting from two sheets 13a and 13b of non-woven fabric material connected to each other (preferably by sewing) along connection lines 14 parallel to one another. The pitch of such lines is regular and is suitably selected according to the diameter of terminals 12 of electrode 11. A plurality of longitudinal pockets therefore creates between the two sheets which will take on the end tubular shape by thermo-forming.

Herein and in the following description, longitudinal orientation refers to the orientation parallel to the longitudinal development of the tubular pockets, that is (referring to the sheathing in operation) to the longitudinal development of the electrode terminals.

By "staple fibres" it is generally meant fibres cut into small "crops" (or short fibres), which are in bulk and therefore without a predetermined or preferential arrangement.

In the specific case, referring to the fact that the sheathing is made of thermo-formed non-woven fabric "consisting of staple fibres made integral with one another" it is understood that the non-woven fabric is made "starting from staple fibres" that are then made integral with one another (for example by melting, thanks to the presence of thermo-forming fibres or by cross-linking, thanks to the presence of synthetic bonding resins).

The general definition of staple fibre given above does not exclude that in the non-woven fabric that makes up the sheathing the staple fibres may also be found with a predetermined or preferential arrangement.

Preferably, the count of fibres used to make the sheathing according to the invention is comprised between 0.1 and 4 dTex (grams of fibre by 10,000 m length). On the other hand, the fibre cut is preferably comprised between 30 and 80 mm.

According to a particularly preferred embodiment, the sheathing is obtained starting from staple fibres with count comprised between 0.8 and 2.5 dTex. The sheathing exhibits a closer and more compact structure such as to make it less permeable (to be understood as greater filtering capacity against the active mass of the electrodes without increase of electrical resistance) - basic weight being equal - as compared to sheathing obtained starting from fibres with a count above 2.5 dTex.

Advantageously, it is also possible to use staple fibres with count comprised between 0.1 and 0.5 dTex, or microfibres, thus obtaining a non-woven fabric with an even closer structure against an increase of the manufacturing costs (essentially related to the higher cost of microfibres).

Using staple microfibres, the "retaining" (filtering) effect towards the active matter (for example lead oxide) being equal, it is possible to make sheathing with lower count.

The sheathing is made starting from (staple) fibres consisting of acid resistant polymers, such as polyester and polypropylene.

Advantageously, the fibres may be monocomponent or bicomponent.

The term bicomponent fibre generally means fibres consisting of at least two types of polymers having different melting points.

Preferably but not necessarily, bicomponent fibres are used from two coaxially extruded polymers, where the high melting polymer is arranged at the centre and the low melting polymer is outside.

The arrangement of the two polymers in the thread-like fibre structure must not be intended as limiting. In fact, advantageously, it is also possible to use bicomponent fibres with a non-coaxial distribution of the two polymers. For example, bicomponent fibres may be used wherein portions of a polymer and portions of the other polymer alternate in longitudinal direction.

The process for making a multitubular sheathing according to the invention shall now be described in greater detail.

Staple fibres are first subject to a series of operations (in se known) aimed at obtaining a mass of material as homogeneous as possible.

If the sheathing is made with fibres having different composition, the mixing of the different fibres is also envisaged at this stage.

Next, the fibres are processed by carding machines for making fibre webs. The fibre webs are then overlapped by a card web device according to one or more different preferential orientations (for example, longitudinal and/or transversal) for creating a fibre pad of the desired basic weight. It is also possible to arrange the fibres in an irregular manner (random fibres), optionally in a portion only of the pad.

Preferably, two cross carding machines and a longitudinal carding machine are provided, whose respective processing lines are connected at the card web device.

Advantageously, as shall be explained hereinafter, it is possible to make pads formed by layers featuring different preferential orientations of the fibres. As shall be explained hereinafter, for example it is possible to make a pad with fibres oriented longitudinally in at least one layer (preferably surface) and with random fibres or oriented transversally in the other layers.

Advantageously, feeding the carding machines with fibres of different composition it is possible to make pads formed by layers featuring not just different preferential orientation of the fibres, but also (or as an alternative) by different fibre composition (for example, layer with polyester fibres and layer with polypropylene fibres, or layer with monocomponent polyester fibres and layer with bicomponent polyester fibres, or still layers having different mixtures of fibres).

Resuming the description of the process for making the sheathing, advantageously, after the pad forming step, a step of pre-wetting the product being processed may be provided. The pad is squeezed by a perforated cylinder, which compacts the pad itself while sprinkling it with water. In this way it is possible to reduce the pad thickness and eject the air trapped therein.

At this point, the fibres forming the pad are physically "linked" to one another by needle punching.

According to a preferred embodiment of the invention, the non-woven fabric is made by the technology known by the name of "SPUNLACE", which consists in a needle punching of the staple fibres by spunlacing.

The difference between the spunlacing technology and conventional interlacing systems (for example needle punching) is that this "bonding" takes place by very thin water jets at a high pressure (that in the practice act as needles).

At the outlet from the needle punching zone, the material is bonded but wet. The material is thus sent to a furnace so as to allow drying thereof and allow any thermo-plastic fibres to "react".

More in detail, if bicomponent thermo-plastic fibres are used the temperatures and the standing times of the pad within the furnace are selected so that the low melting component reaches the fusion so as to allow the various fibres to link to each other and once cooled, to stiffen the material.

if monocomponent thermo-plastic fibres (for example, polypropylene) are used, the temperatures and the standing times of the pad within the furnace are selected so that the thermo-plastic fibres soften without melting completely, so as to link to each other and to the other fibres without losing their thread-like shape.

Advantageously, when a subsequent resin-bonding of the non-woven fabric is envisaged and monocomponent fibres are used, the furnace treatment step may also be carried out for drying purpose only, avoiding the fibre softening or melting.

Preferably, after the furnace treatment step, the pad may be subject - prior to cooling - to a calendering step to obtain a smaller thickness and a smoother surface, and thus facilitate the subsequent processes.

Advantageously, calendering may be carried out in hot or cold conditions.

Preferably, calendering is carried out with smooth calenders. In this way, especially when hot calendering is adopted, the forming of localised melting points on the pad surface is prevented, which in operation, that is, with the sheathing in contact with the electrode terminals, would make zones of higher electrical resistance.

On the other hand, in many solutions of the prior art (non-woven fabric made by spunbponding) the problem mentioned above occurs frequently. The pad calendering (normally hot) in fact is carried out by embossing calenders, usually of the type with relief points (as envisaged in the technology known as "point bonded"). Since the relief points have a limited surface, in fact they are preferential heat transmission zones, at which the complete melting of the contacting material easily takes place.

At the end of the processes described above, the non-woven fabric is in the form of sheets that may be rolled up for optional storage.

if the use of bonding resins is envisaged, non-woven sheets are then subject to resin-bonding, according to known techniques.

Non-woven sheets are then cut to the desired size based on the size of the electrodes to be coated.

As already mentioned, the sheathing according to the invention is obtained by overlapping two sheets of non-woven fabric of suitable size. The two sheets are then connected to each other by sewing along parallel lines forming pockets intended for seating the electrode terminals.

The sheathing thus obtained is then subject to a thermo-forming step with the insertion of spindles inside the above pockets, for impart the end multitubular shape thereto.

Operatively, during the thermo-forming step such temperatures are achieved as to allow the softening/melting of the thermo-forming fibres and/or the complete cross-linking of any bonding resins therein.

The use of staple fibres allows imparting higher thickness evenness as compared to the use of spunbond fibres. This is essentially due to the possibility of compacting short fibres to one another better than with spunbond fibres.

In particular, such effect is further increased if low count staple fibres are used, that is, in particular comprised between 0.1 and 2.5 dTex.

As compared to conventional needle punching techniques (for example by needles), the punching by spunlacing allows obtaining a product with a "closer" structure, meaning that the fibres are bonded in a more effective and even manner.

Spunlacing further allows using lower count fibres, with the further advantage of obtaining an end product with higher density and more even surface features. This imparts greater regularity of performance to the sheathing.

The fact of adopting spunlacing instead of the traditional needle punching further prevents all the problems related to the breakage of needles and in particular the capture of the same within the spunbonded fabric.

Advantageously, using staple fibres gives good results at least in terms of evenness of the end material, also adopting the traditional needle punching (a possibility covered by the present finding).

According to a first preferred embodiment of the invention, the thermo-forming fibres consist of bicomponent polyester fibres, that is, fibres consisting of two coaxially extruded polyesters, where at the centre a first polyester is arranged melting at a higher temperature than that of thermo-forming of the same sheathing (for example a normal polyester melting at about 260°C), whereas a second polyester is arranged outside melting at a temperature equal to or below the thermo-forming temperature of the sheathing (for example melting between 110°C and 160°C).

According to this first preferred embodiment, in terms of fibre composition, the non-woven fabric preferably comprises polyester fibres (monocomponent) comprised between 40% and 60% of the total fibre present, and bicomponent polyester fibres comprised between 40% and 60% of the total fibre in the TNT.

Preferably, the polyester of the monocomponent fibres will be for example of the same type that makes the core of the bicomponent fibres and in any case, it will have a melting temperature higher than that of polyester that makes the skirt of the bicomponent fibres.

According to another embodiment, the non-woven fabric may be 100% made of bicomponent polyester fibres.

The use of this type of fibre (i.e. bicomponent polyester fibres) allows not using synthetic resins which, as said, are less resistant to acids as compared to polyester and polypropylene.

The fact of using two polyesters, of which one (making up the skirt of the bicomponent fibres) with thermo-forming function and the other (making up the core of such fibres) with structural function, allows not using other fibres in a mixture, such as polypropylene, which would make the end of life recycling or the reuse of process scrap more difficult.

According to another embodiment of the invention, the non-woven fabric can comprise bicomponent polyester fibres comprised between 40% and 60% of the total fibre of the non-woven fabric and polypropylene fibres comprised between 40% and 60% of the total fibre of non-woven fabric. In this case, the thermo-formability is mainly ensured by the bicomponent polyester fibres. The polypropylene fibres can contribute to the thermo-formability of the sheathing if the skirt polyester has a melting temperature close to that of polypropylene (∼ 160°C).

According to a further embodiment of the invention, the non-woven fabric can comprise monocomponent polyester fibres comprised between 40% and 60% of the total fibre of the non-woven fabric and polypropylene fibres comprised between 40% and 60% of the total fibre of non-woven fabric. In this case the thermo-formability is mainly ensured by the polypropylene fibres, the polyester preferably having a melting point (for example ∼ 230°C) higher than that of polypropylene (∼ 160°C).

Advantageously, the use of staple fibres may be conveniently combined with other resin-bonded fibres with thermo-forming synthetic resin, such as styrene-butadiene or acrylic resins, or with polypropylene fibres because, type of fibres used being equal, a sheathing with staple fibres exhibits a more homogeneous thickness (and the optional use of spunlacing allows optimum closing of fibres and absence of needle crops) compared to known type sheathing.

With the term "resin-bonded fibres" it is meant both resins subject to resin bonding prior to forming the non-woven fabric and fibres subject to resin bonding after forming the non-woven fabric.

According to a particular embodiment, the non-woven fabric may be entirely made of polypropylene fibres.

Advantageously, the fibres may be also be of the resin bonded type. In this case, the TNT may for example consist of:

- staple fibres comprised between 80% and 90% by weight of the non-woven fabric,

- bonding resin comprised between 10% and 20% by weight of the non-woven fabric.

Preferably, in this case, such bonding resin consists of styrene-butadiene or acrylic resins.

In such example the staple fibres may consist of polyester fibres (monocomponent) in an amount equal to 100% (by weight) of the total fibre, or as an alternative, they may consist of:

- polyester fibres (monocomponent) in an amount comprised between 80% and 90% (by weight) of the total fibres present, and

- polypropylene fibres in an amount comprised between 10% and 20% (by weight) of the total fibres present.

A preferred embodiment envisages, in particular, on the total fibres present, 85% (by weight) of polyester fibres (monocomponent) and the balance 15% (by weight) of polypropylene fibres.

in the same example relating to resin bonded fibres, the fibres may comprise:

- polyester fibres (monocomponent) in an amount comprised between 80% and 90% (by weight) of the total fibres present, and

- bicomponent polyester fibres in an amount comprised between 10% and 20% (by weight) of the total fibres present.

A preferred embodiment envisages, in particular, on the total fibres present, 85% (by weight) of polyester fibres (monocomponent) and the balance 15% of bicomponent polyester fibres.

As already mentioned before, according to a particularly preferred solution of the invention, the non-woven fabric used to make the multitubular sheathing exhibits layers that differ in the preferential orientation of the fibres.

According to a particularly preferred embodiment solution, the non-woven fabric pad is made so as to exhibit a layer with fibres having a preferential longitudinal pattern at the side intended to contact the electrode terminals. The rest of the pad on the other hand consists of one or more layers of fibres with random orientation (random) or having preferential cross patterns (optionally in turn crossed with one another).

Hereinafter, for simplicity, the side or the layer of the pad intended to contact the terminals shall be defined as inner side or layer.

From a functional point of view, the longitudinal orientation of fibres in the inner layer facilitates the sliding of the spindles inside the pockets in the thermo-forming step, further allowing a controlled narrowing of the non-woven fabric. Such longitudinal orientation further favours the filling of the tubular pockets with the lead oxide (active matter laid on the terminals) as it makes the contact between sheathing and active matter smoother. Such orientation further increases the retaining effect of the sheathing against the active matter.

The other layers of the pad having preferential cross orientations on the other hand, impart a mechanical resistance to the sheathing in all directions, also ensuring elasticity to the sheathing.

The pad shape with inner layer having fibres mainly oriented in longitudinal direction may be adopted both if the material resin-bonding is envisaged and if such process is not envisaged.

Advantageously, it is possible to make the pad in such a way that the layers are made of fibres having different composition.

Particularly preferred is the solution wherein the fibres of the inner pad layer are 100% polyester (monocomponent) and exhibit a preferential longitudinal orientation. The other layers of the pad may consist of polyester fibres (monocomponent or bicomponent) or polypropylene fibres, neat or in a mixture with each other.

Solutions may be provided with the inner layer made up of mixtures of different fibres or fibres not made of polyester.

Below are some specific examples of embodiments of a sheathing according to the invention.

Example 1

Staple fibres of two types are used as raw material: monocomponent polyester fibres with a melting point equal to about 260°C, count equal to 1.7 dTex and cut of 38 mm; bicomponent polyester fibres (PES of the skirt with melting point of about 160°C; PES of the core with a melting point of about 260°C) count equal to 2.2 dTex and cut of 51 mm.

The system envisages two cross carding machines and a longitudinal carding machine. The cross carding machines are fed with 83% by weight of monocomponent polyester fibres and 17% of bicomponent polyester fibres. The longitudinal carding machine is fed with monocomponent polyester fibres only.

The pad in output from the card web device has a basic weight equal to 125 g/m2 of fibre, whereof 15 g/m² resulting from fibres processed by the longitudinal carding machine and 110 g/m² resulting from the fibres processed by the cross carding machines.

The pad is subject to pre-wetting and then needle punching by spunlacing. A furnace treatment step follows to allow the bicomponent polyester fibres to soften/melt and thus bond with each other and with the other fibres. The pad is then subject to hot calendering with smooth calenders.

The pad is then subject to resin bonding. In this step, acrylic resin is applied by impregnation to bring the end basic weight of the pad to 150 g/m².

The material thus obtained is in the shape of sheets. The sheets may undergo a first cut to bring them to the desired size before they are sewn by twos to make the multitubular sheathing. A thermo-forming, cooling and end cutting step will then follow.

Example 2

The process was as in example 1, but using only staple fibres of monocomponent polyester as raw material, with a melting point equal to about 260°C, count equal to 1.7 dTex and cut of 38 mm.

The cross carding machines and the longitudinal carding machine have then been fed with monocomponent polyester fibres only, obtaining in output from the card web device a pad with a basic weight equal to 120 g/m2 of fibre, whereof 15 g/m² resulting from fibres processed by the longitudinal carding machine and 105 g/m² resulting from the fibres processed by the cross carding machines.

The pad is subject to pre-wetting and then needle punching by spunlacing. A furnace treatment step follows to allow the pad to dry up, but without softening the polyester fibres.

The pad is then subject to hot calendering with smooth calenders and then to resin bonding. In this step, acrylic resin is applied by impregnation to bring the end basic weight of the pad to 150 g/m².

Example 3

The process was as in example 2, with the exception of the fact that the furnace treatment step was adjusted so as to make the polyester fibres soften.

Example 4

Staple fibres of two types are used as raw material: monocomponent polyester fibres with a melting point equal to about 260°C, count equal to 1.7 dTex and cut of 38 mm; bicomponent polyester fibres (PES of the skirt with melting point of about 160°C; PES of the core with a melting point of about 260°C) count equal to 2.2 dTex and cut of 51 mm.

The system envisages two cross carding machines and a longitudinal carding machine. The cross carding machines are fed with 55% by weight of monocomponent polyester fibres and 45% of bicomponent polyester fibres. The longitudinal carding machine is fed with monocomponent polyester fibres only.

The pad in output from the card web device has a basic weight equal to 150 g/m² of fibre, whereof 15 g/m² resulting from fibres processed by the longitudinal carding machine and 135 g/m² resulting from the fibres processed by the cross carding machines. On the average, the bicomponent polyester fibres are 40% by weight of the fibres, the balance 60% being formed by monocomponent polyester fibres.

The pad is subject to pre-wetting and then needle punching by spunlacing. A furnace treatment step follows to allow the bicomponent polyester fibres to soften/melt and thus bond with each other and with the other fibres. The pad is then subject to hot calendering with smooth calenders.

The material thus obtained is in the shape of sheets. The sheets may undergo a first cut to bring them to the desired size before they are sewn by twos to make the multitubular sheathing. A thermo-forming, cooling and end cutting step will then follow.

Example 5

The process was as in example 4 with the only difference that the cross carding machines are fed with 45% by weight of monocomponent polyester fibres and 55% of bicomponent polyester fibres. On the average, the bicomponent polyester fibres are 50% by weight of the fibres, the balance 50% being formed by monocomponent polyester fibres.

It has been experimentally proved that multitubular sheathing made according to the invention exhibits lower electrical resistance as compared to known sheathing made with spunbonding technology.

To this end, tests were conducted for measuring the electrical resistance on two sheaths made according to the invention and a sheath of known type considered as a market standard. The first sheath (A) according to the invention is made as in example 2, whereas the second sheath (B) according to the invention is made as in example 5. The known type sheath (C) is made with spunbonding technology (SPUNBOND) of resin bonded polyester fibres with basic weight of 150 g/m².

The following mean values were obtained: 0.15 Ohm/cm² sheathing A; 0.075 Ohm/cm² sheathing B; 0.27 Ohm/cm² for sheathing C.

Moreover, it has been experimentally proved that multitubular sheathing made according to the invention exhibits a higher specific soaking volume as compared to known sheathing made with spunbonding technology.

To this end, measurements of the soaking volume were taken on the same three types of sheaths already subject to electrical resistance measurements.

The following mean values were obtained: 325 g H₂O/100 gr sheathing for sheathing A; 387 g H₂O/100 gr sheathing for sheathing B; 200 g H₂O/100 gr sheathing for sheathing C.

Moreover, it has been experimentally proved that sheathing made according to the invention exhibits a higher filtering capacity with mixtures of lead oxides in aqueous solution as compared to the market standard.

The experimental tests conducted have allowed to determined that on the average, in the liquid filtered by sheathing made according to the invention, there are 50 to 100 g of lead oxide by litre of filtered solution less than known sheathing made by spunbonding.

In the practice, it has been found that the finding thus described achieves the task and the objects thereof.

In fact, a multitubular sheathing for positive electrodes to be inserted in industrial batteries for "electrical drive" and/or "energy reserve" is achieved with the present finding, which exhibits greater thickness evenness. Such thickness evenness in particular ensures higher filtering capacity against lead oxides.

The use of non-woven fabric made starting from staple fibres has allowed obtaining a sheathing with a more compact and homogeneous structure that in particular ensures more constant and lower electrical resistance. These features are enhanced adopting a needle punching system by spunlacing.

In the preferred embodiment, the sheathing consists of a TNT that by virtue of the spunlacing technology used is free from needle crops.

Still, by the present finding, a particularly acid resistant sheathing is obtained by using acid resistance fibres.

Still, the fact of using thermo-bonding polyester fibres makes the procurement costs be particularly low and in any case less than those of synthetic bonding resins.

## Claims

1. Multitubular sheathing for electrodes of industrial batteries, which defines a plurality of longitudinal pockets receiving the terminals (12) of an electrode (11) inside, said seating being made of thermo-formed non-woven fabric formed from staple fibres made integral with one another, at least a portion thereof consisting of thermo-forming fibres, **characterized in that** the surface of said sheathing contacting said terminals exhibits a layer of non-woven fabric having fibres oriented in longitudinal direction.

2. Multitubular sheathing for electrodes, according to the previous claim, **characterised in that** said staple fibres are needle punched to each other by spunlacing.

3. Multitubular sheathing for electrodes, according to one or more of the previous claims, **characterised in that** said thermo-forming fibres are bicomponent polyester fibres consisting of two coaxially extruded polyesters where in the centre a first polyester is arranged melting at a higher temperature than that of thermo-forming of the same sheathing whereas a second polyester is arranged outside melting at a temperature equal to or below the thermo-forming temperature of the sheathing.

4. Multitubular sheathing for electrodes, according to the previous claim, **characterised in that** said non-woven fabric comprises polyester fibres comprised between 40% and 60% by weight of the total fibre of the non-woven fabric and said bicomponent polyester fibres comprised between 40% and 60% by weight of the total fibre of non-woven fabric.

5. Multitubular sheathing for electrodes, according to claim 3, **characterised in that** said non-woven fabric comprises said bicomponent polyester fibres comprised between 40% and 60% by weight of the total fibre of the non-woven fabric and polypropylene fibres comprised between 40% and 60% by weight of the total fibre of non-woven fabric.

6. Multitubular sheathing for electrodes, according to claim 3, **characterised in that** said non-woven fabric consists by 100% of said bicomponent polyester fibres.

7. Multitubular sheathing for electrodes, according to claim 1 or 2, **characterised in that** said non-woven fabric comprises polyester fibres comprised between 40% and 60% by weight of the total fibre of the non-woven fabric and polypropylene fibres comprised between 40% and 60% by weight of the total fibre of non-woven fabric.

8. Multitubular sheathing for electrodes, according to claim 1 or 2, **characterised in that** said non-woven fabric consists by 100% of polypropylene fibres.

9. Multitubular sheathing for electrodes, according to claim 1 or 2, **characterised in that** said non-woven fabric consists of:
- staple fibres comprised between 80% and 90% by weight of the non-woven fabric; and
- bonding resin comprised between 10% and 20% by weight of the non-woven fabric.

10. Multitubular sheathing for electrodes, according to the previous claim, **characterised in that** said bonding resin consists of styrene-butadiene and/or acrylic resins.

11. Multitubular sheathing for electrodes, according to claim 9 or 10, **characterised in that** said staple fibres consist of polyester fibres in an amount equal to 100% of the total fibre.

12. Multitubular sheathing for electrodes, according to claim 9 or 10, **characterised in that** said fibres comprise:
- polyester fibres in an amount equal to 85% by weight of the total fibres present; and
- polypropylene fibres in an amount equal to 15% by weight of the total fibres present.

13. Multitubular sheathing for electrodes, according to claims 3 and 9, **characterised in that** said fibres comprise:
- polyester fibres in an amount equal to 85% by weight of the total fibres present; and
- bicomponent polyester fibres in an amount equal to 15% by weight of the total fibres present.

14. Multitubular sheathing, according to claim 1, **characterised in that** the fibres of said layer are of polyester.

15. Multitubular sheathing according to any one of the previous claims, **characterised in that** said fibres have a count comprised between 0.1 and 4 dTex.

16. Multitubular sheathing according to claim 15, **characterised in that** said fibres have a count comprised between 0.8 and 2.5 dTex.

17. Process for making multitubular sheathing for electrodes, **characterised in**:
- making a non-woven fabric by spunlacing starting from staple fibres; and
- thermo-forming said non-woven fabric according to the sheathing shape in order to create a plurality of longitudinal pockets intended to receive the terminals (12) of an electrode (11) inside, said non-woven fabric being made so that the surface of said sheathing intended to contact said terminals exhibits fibres oriented in longitudinal direction, said staple fibres comprising at least a portion of thermo-forming fibres.

18. Process according to claim 17, **characterised in that** said non-woven fabric comprises bonding resins.

19. Process according to claim 17 or 18, **characterised in that** said non-woven fabric is subject to a hot calendering step with smooth calenders.

20. Process according to any one of claims 17 to 19, **characterised in that** said non-woven fabric is made with layers having different orientations of said fibres.

## Patentansprüche

1. Mehrrohrummantelung für Elektroden von Industriebatterien, die eine Mehrzahl von Längstaschen bildet, welche die Enden (12) einer Elektrode (11) aufnehmen, wobei die Ummantelung aus einem warmgeformten Vliesstoff besteht, der aus Stapelfasern, die miteinander einstückig verbunden sind, gebildet ist, wobei wenigstens ein Teil derselben aus warmformbaren Fasern besteht, **dadurch gekennzeichnet, dass** die Fläche der Ummantelung, die die Enden kontaktiert, eine Lage eines Vliesstoffes mit in Längsrichtung ausgerichteten Fasern aufweist.

2. Mehrrohrummantelung für Elektroden gemäß dem vorangehenden Anspruch, **dadurch gekennzeichnet, dass** die Stapelfasern mittels Spunlace-Verfahren miteinander verfestigt sind.

3. Mehrrohrummantelung für Elektroden gemäß einem oder mehreren der vorangehenden Ansprüche, **dadurch gekennzeichnet, dass** die warmformbaren Fasern Bikomponentenpolyesterfasern sind, die aus zwei koaxial extrudierten Polyestern bestehen, wobei im Zentrum ein erstes Polyester angeordnet ist, das bei einer höheren Temperatur als die bei der Warmformung der gleichen Ummantelung schmilzt, wobei ein zweites Polyester an der Außenseite angeordnet ist, das bei einer Temperatur gleich oder unterhalb der Warmformtemperatur der Ummantelung schmilzt.

4. Mehrrohrummantelung für Elektroden gemäß dem vorangehenden Anspruch, **dadurch gekennzeichnet, dass** der Vliesstoff Polyesterfasern, die zwischen 40% und 60% des Gewichts des Gesamtfaseranteils des Vliesstoffes ausmachen, und den Bikomponentenpolyesterfasern besteht, die zwischen 40% und 60% des Gewichts des Gesamtfaseranteils des Vliesstoffes ausmachen.

5. Mehrrohrummantelung für Elektroden gemäß Anspruch 3, **dadurch gekennzeichnet, dass** der Vliesstoff Bikomponentenpolyesterfasern umfasst, die zwischen 40% und 60% des Gewichts des Gesamtfaseranteils des Vliesstoffes ausmachen, und Polypropylenfasern, die zwischen 40% und 60% des Gewichts des Gesamtfaseranteils des Vliesstoffes ausmachen, besteht.

6. Mehrrohrummantelung für Elektroden gemäß Anspruch 3, **dadurch gekennzeichnet, dass** der Vliesstoff aus 100% der Bikomponentenpolyesterfasern besteht.

7. Mehrrohrummantelung für Elektroden gemäß Anspruch 1 oder 2, **dadurch gekennzeichnet, dass** der Vliesstoff Polyesterfasern, die zwischen 40% und 60% des Gewichts des Gesamtfaseranteils des Vliesstoffes ausmachen, und Polypropylenfasern umfasst, die zwischen 40% und 60% des Gewichts des Gesamtfaseranteils des Vliesstoffes ausmachen.

8. Mehrrohrummantelung für Elektroden gemäß Anspruch 1 oder 2, **dadurch gekennzeichnet, dass** der Vliesstoff zu 100% aus Polypropylenfasern besteht.

9. Mehrrohrummantelung für Elektroden gemäß Anspruch 1 oder 2, **dadurch gekennzeichnet, dass** der Vliesstoff aus
- Stapelfasern, die zwischen 80% und 90% des Gewichts des Vliesstoffes ausmachen, und
- Bindeharz, das zwischen 10% und 20% des Gewichts des Vliesstoffes ausmachen, besteht.

10. Mehrrohrummantelung für Elektroden gemäß dem vorangehenden Anspruch, **dadurch gekennzeichnet, dass** das Bindeharz aus Styren-Butadien- und/oder Akrylharzen besteht.

11. Mehrrohrummantelung für Elektroden gemäß Anspruch 9 oder 10, **dadurch gekennzeichnet, dass** die Stapelfasern Polyesterfasern mengenmäßig 100% des Gesamtfaseranteils ausmachen.

12. Mehrrohrummantelung für Elektroden gemäß Anspruch 9 oder 10, **dadurch gekennzeichnet, dass** die Fasern
- Polyesterfasern in einer Menge von bis zu 85% des Gesamtgewichts der vorhandenen Fasern,
Und
Polypropylenfasern in einer Menge von bis zu 15% des Gesamtgewichts der vorhandenen Fasern umfassen.

13. Mehrrohrummantelung für Elektroden gemäß Ansprüche 3 und 9, **dadurch gekennzeichnet, dass** die Fasern
- Polyesterfasern in einer Menge von 85% des Gesamtgewichts der vorhandenen Fasern
und
- Bikomponentenpolyesterfasern in einer Menge von 15% des Gesamtgewichts der vorhandenen Fasern
umfassen.

14. Mehrrohrummantelung gemäß Anspruch 1, **dadurch gekennzeichnet, dass** die Fasern der Lage aus Polyester hergestellt sind.

15. Mehrrohrummantelung gemäß irgend einem der vorangehenden Ansprüche, **dadurch gekennzeichnet, dass** die Fasern eine Stärke, die zwischen 0,1 und 4 dTex beträgt, aufweisen.

16. Mehrrohrummantelung gemäß Anspruch 15, **dadurch gekennzeichnet, dass** die Fasern eine Stärke, die zwischen 0,8 und 2,5 dTex beträgt, aufweisen.

17. Verfahren zur Herstellung einer Mehrrohrummantelung für Elektroden **gekennzeichnet durch**:
- Herstellen eines Vliesstoffes **durch** Spunlace-Verfahren ausgehend von Stapelfasern und
- Warmformen des Vliesstoffes entsprechend der Ummantelungsform, um eine Mehrzahl von Längstaschen zu bilden, die dazu bestimmt sind, die Enden (12) einer Elektrode (11) darin aufzunehmen, wobei der Vliesstoff derart hergestellt ist, dass die Fläche der Ummantelung, die dazu bestimmt ist, die Enden zu kontaktieren, Fasern aufweist, die in Längsrichtung ausgerichtet sind, wobei die Stapelfasern wenigstens einen Teil der warmformbaren Fasern umfassen.

18. Verfahren gemäß Anspruch 17, **dadurch gekennzeichnet, dass** der Vliesstoff Bindeharze umfasst.

19. Verfahren gemäß Anspruch 17 oder 18, **dadurch gekennzeichnet, dass** der Vliesstoff einem Heißglätten in einem Glättwerk unterzogen wird.

20. Verfahren gemäß irgend einem der Ansprüche 17 bis 19, **dadurch gekennzeichnet, dass** der Vliesstoff aus Lagen, die unterschiedliche Faserausrichtungen aufweisen, hergestellt wird.

## Revendications

1. Gainage multitubulaire pour électrodes de batteries industrielles, qui définit une pluralité de poches longitudinales recevant à l'intérieur les bornes (12) d'une électrode (11), ledit gainage étant fabriqué en étoffe en non-tissé thermoformé formée à partir de fibres discontinues rendues solidaires les unes des autres, au moins une partie de celles-ci étant constituée de fibres de thermoformage, **caractérisé en ce que** la surface dudit gainage en contact avec lesdites bornes présente une couche d'étoffe en non-tissé ayant des fibres orientées dans la direction longitudinale.

2. Gainage multitubulaire pour électrodes selon la revendication précédente, **caractérisé en ce que** lesdites fibres discontinues sont aiguilletées mutuellement par enchevêtrement au jet.

3. Gainage multitubulaire pour électrodes selon une ou plusieurs des revendications précédentes, **caractérisé en ce que** lesdites fibres de thermoformage sont des fibres de polyester à deux composants constituées de deux polyester coaxialement extrudés où, au centre, est aménagé un premier polyester qui fond à une température supérieure à celle du thermoformage du même gainage, tandis qu'il est aménagé à l'extérieur un second polyester fondant à une température égale ou inférieure à la température de thermoformage du gainage.

4. Gainage multitubulaire pour électrodes selon la revendication précédente, **caractérisé en ce que** ladite étoffe en non-tissé comprend des fibres de polyester comprises entre 40 % et 60 % en poids du total des fibres du non-tissé et lesdites fibres de polyester à deux composants comprises entre 40 % et 60 % en poids du total des fibres du non-tissé.

5. Gainage multitubulaire pour électrodes selon la revendication 3, **caractérisé en ce que** ladite étoffe en non-tissé comprend lesdites fibres de polyester à deux composants comprises entre 40 % et 60 % en poids du total des fibres du non-tissé et des fibres de polypropylène comprises entre 40 % et 60 % en poids du total des fibres du non-tissé.

6. Gainage multitubulaire pour électrodes selon la revendication 3, **caractérisé en ce que** ladite étoffe en non-tissé est constituée à 100 % desdites fibres de polyester à deux composants.

7. Gainage multitubulaire pour électrodes selon la revendication 1 ou 2, **caractérisé en ce que** ladite étoffe en non-tissé comprend des fibres de polyester comprises entre 40 % à 60 % en poids du total des fibres du non-tissé et des fibres de polypropylène comprises entre 40 % et 60 % en poids du total des fibres du non-tissé.

8. Gainage multitubulaire pour électrodes selon la revendication 1 ou 2, **caractérisé en ce que** ladite étoffe en non-tissé est constituée à 100 % de fibres de polypropylène.

9. Gainage multitubulaire pour électrodes selon la revendication 1 ou 2, **caractérisé en ce que** ladite étoffe en non-tissé est constituée :
- de fibres discontinues comprises entre 80 et 90 % en poids du non-tissé ; et
- d'une résine de liaison comprise entre 10 % et 20 % en poids du non-tissé.

10. Gainage multitubulaire pour électrodes selon la revendication précédente, **caractérisé en ce que** ladite résine de liaison est constituée de styrène-butadiène et/ou de résines acryliques.

11. Gainage multitubulaire pour électrodes selon la revendication 9 ou 10, **caractérisé en ce que** lesdites fibres discontinues sont constituées de fibres de polyester en quantité égale à 100 % du total des fibres.

12. Gainage multitubulaire pour électrodes selon la revendication 9 ou 10, **caractérisé en ce que** lesdites fibres comprennent :
- des fibres de polyester en quantité égale à 85 % en poids du total des fibres présentes ; et
- des fibres de polypropylène en quantité égale à 15 % en poids du total des fibres présentes.

13. Gainage multitubulaire pour électrodes selon les revendications 3 et 9, **caractérisé en ce que** lesdites fibres comprennent :
- des fibres de polyester en quantité égale à 85 % en poids du total des fibres présentes ; et
- des fibres de polyester à deux composants en quantité égale à 15 % en poids du total des fibres présentes.

14. Gainage multitubulaire selon la revendication 1, **caractérisé en ce que** les fibres de ladite couche sont en polyester.

15. Gainage multitubulaire selon l'une quelconque des revendications précédentes, **caractérisé en ce que** lesdites fibres ont un titre de 0,1 à 4 dTex.

16. Gainage multitubulaire selon la revendication 15, **caractérisé en ce que** lesdites fibres ont un titre de 0,8 à 2,5 dTex.

17. Procédé pour fabriquer un gainage multitubulaire pour électrodes, **caractérisé par** les étapes consistant à
- fabriquer une étoffe en non-tissé par enchevêtrement au jet en partant de fibres discontinues ; et
- thermoformer ladite étoffe en non-tissé en forme de gainage de manière à créer une pluralité de poches longitudinales destinées à recevoir à l'intérieur les bornes (12) d'une électrode (11), ladite étoffe en non-tissé étant conçue de sorte que la surface dudit gainage destinée à venir en contact avec lesdites bornes présente des fibres orientées dans la direction longitudinale, lesdites fibres discontinues comprenant au moins une partie de fibres de thermoformage.

18. Procédé selon la revendication 17, **caractérisé en ce que** ladite étoffe en non-tissé comprend des résines liantes.

19. Procédé selon la revendication 17 ou 18, **caractérisé en ce que** ladite étoffe en non-tissé est soumise à une étape de calandrage à chaud avec des calandres lisses.

20. Procédé selon l'une quelconque des revendications 17 à 19, **caractérisé en ce que** ladite étoffe en non-tissé est fabriquée avec des couches dont lesdites fibres sont orientées différemment.
